# FASCICULE DE BREVET EUROPEEN

(11) **EP 3 087 041 B1**
(45) Date de publication et mention de la délivrance du brevet: **27.02.2019**
(21) Numéro de dépôt: 14835481.4
(22) Date de dépôt: 19.12.2014
(51) Int. Cl.: C03B 5/235, C03B 5/237, F23L 15/04, F25J 3/04

(54) **COMBUSTION AVEC RÉCUPÉRATION DE CHALEUR AMELIORÉE**
VERBRENNUNG MIT VERBESSERTER WÄRMERÜCKGEWINNUNG
COMBUSTION WITH IMPROVED HEAT RECOVERY

(30) Priorité: 23.12.2013 FR 1363459
(43) Date de publication de la demande: 02.11.2016
(73) Titulaire: L'Air Liquide Société Anonyme pour l'Etude et l'Exploitation des Procédés Georges Claude, 75007 Paris (FR)
(72) Inventeur: JARRY, Luc, F-61270 Beaufai (FR); JOUMANI, Youssef, F-78121 Crespieres (FR); LEROUX, Bertrand, F-91650 Breuillet (FR); TSIAVA, Rémi, F-91250 Saint Germain-les-Corbeil (FR)
(74) Mandataire: De Vleeschauwer, Natalie Y.L.D.
(86) Numéro de dépôt international: PCT/FR2014/053474
(87) Numéro de publication internationale: WO 2015/097386

(56) Documents cités:
- EP-A1- 0 137 059
- US-A- 6 126 440

## Description

La présente invention concerne un procédé pour la combustion d'un combustible avec comme comburant un gaz riche en oxygène préchauffé.

Dans l'industrie, l'air reste le comburant, c'est-à-dire l'oxydant de combustion, le plus souvent utilisé.

Il est toutefois connu d'utiliser comme comburant de l'oxygène au lieu de l'air, notamment pour améliorer l'efficacité de la combustion, pour maximiser l'exploitation de l'énergie thermique générée et pour réduire les émissions polluantes, telles que des NO_{x.}

Si l'intérêt énergétique et environnemental de la combustion avec de l'oxygène est bien connu et reconnu, le coût de l'oxygène par rapport à de l'air continue à limiter l'utilisation de l'oxygène en tant que comburant dans un contexte industriel.

Afin d'améliorer encore plus l'efficacité de l'oxycombustion et de réduire ainsi le besoin en combustible et en oxygène pour un procédé industriel donné, des procédés de préchauffage d'oxygène ont été développés.

Il est notamment connu de préchauffer de l'oxygène dans un échangeur de chaleur. Il est en particulier connu de préchauffer de l'oxygène avec de la chaleur résiduelle présente dans les gaz de combustion (fumées) à la sortie de la chambre de combustion, et ceci au moyen d'un premier échange thermique entre les fumées chaudes et un fluide caloporteur, suivi d'un deuxième échange thermique entre le fluide caloporteur chaud (issu du premier échange thermique) et l'oxygène.

De tels procédés sont notamment décrits dans EP-A-0872690 et dans WO2006/054015.

L'utilisation d'échangeurs de chaleur pour le préchauffage d'oxygène soulève toutefois de délicats problèmes de résistance des matériaux au contact de l'oxygène chaud. En effet, comme décrit dans WO2008/141939, les matériaux de l'échangeur au contact de l'oxygène chaud doivent présenter une très bonne résistance à l'oxydation par ce gaz et ne doivent pas être fragilisés lors de la mise en fonctionnement ou l'arrêt de l'échangeur.

Les aciers les plus courants ne répondent pas à ces exigences et ne permettent donc pas une sécurité suffisante de l'échangeur.

Le critère de sélection suivant a été proposé dans WO2008/141939 pour la sélection des matériaux de l'échangeur de chaleur en contact avec l'oxygène chaud : un alliage métallique dont un échantillon placé dans une atmosphère du gaz riche en oxygène devant circuler dans l'échangeur et à la température la plus élevée rencontrée dans l'échangeur, ne présente pas un gain de poids de plus de 0,1 mg/cm² de surface exposée après 1000 cycles comprenant chacun le maintien à cette température la plus élevée pendant une heure, chaque palier à cette température étant suivi d'un retour à la température ambiante.

Les exigences de résistance susmentionnées s'appliquent évidemment également à toute partie métallique de l'installation qui est en contact avec l'oxygène chaud, telle que les canalisations pour le transport de l'oxygène chaud vers les brûleurs/lances de la chambre de combustion.

Dans WO2008/141939, plusieurs de ces alliages sont mentionnés, par exemple / Inconel 600 H, Inconel 600 L et Inconel 800 H, parmi d'autres.

Malheureusement, de tels alliages et les procédés d'assemblage correspondants ont un coût élevé, ce qui, pour un grand nombre d'installations industrielles, est un obstacle majeur pour la mise en oeuvre d'une telle technologie et pour bénéficier ainsi des avantages, notamment environnementaux, de la combustion avec de l'oxygène préchauffé.

La présente invention a pour but de remédier au moins partiellement à cet inconvénient et de permettre une utilisation plus répandue de la combustion avec de l'oxygène préchauffé.

La présente invention a notamment pour but de permettre de réaliser des procédés et installations pour la combustion d'un combustible avec comme comburant un gaz riche en oxygène préchauffé qui sont robustes et fiables tout en limitant les coûts pour la réalisation des équipements utilisés pour le préchauffage dudit comburant.

La présente invention concerne ainsi un procédé pour la combustion, dans une chambre de combustion, d'un combustible avec un comburant riche en oxygène préchauffé. Ladite combustion génère de la chaleur et des fumées dans ladite chambre de combustion. Les fumées générées sont évacuées de la chambre de combustion. La température des fumées évacuées étant nettement supérieure à la température ambiante, typiquement entre 1200°C et 1600°C, ces fumées évacuées contiennent une quantité importante de chaleur résiduelle.

Le comburant est préchauffé au moyen de ladite chaleur résiduelle dans au moins un échangeur de chaleur et le comburant ainsi préchauffé est fourni à la chambre de combustion pour la combustion du combustible.

Suivant l'invention, on chauffe, dans un premier échangeur de chaleur, un oxydant riche en oxygène, ayant plus particulièrement une teneur 01 en oxygène de 80%vol à 100%vol, et de préférence de 90%vol à 100%vol, par échange thermique avec un premier fluide caloporteur contenant au moins une première partie de la chaleur résiduelle des fumées évacuées, ledit oxydant étant ainsi chauffé d'une température initiale TOi à l'entrée du premier échangeur jusqu'à une température finale TOf à la sortie du premier échangeur, avec TOf >TOi. L'oxydant chauffé issu du premier échangeur de chaleur est ensuite mélangé avec de l'air et/ou un gaz majoritairement inerte, de manière à obtenir un comburant riche en oxygène ayant plus particulièrement une teneur 02 en oxygène de 70%vol à 90%vol, et de préférence de 75%vol à 85%vol, avec 02 < 01. On préchauffe, dans un deuxième échangeur de chaleur, ledit comburant riche en oxygène par échange thermique avec un deuxième fluide caloporteur contenant au moins une deuxième partie de la chaleur résiduelle des fumées évacuées. Le comburant est ainsi amené d'une température initiale TCi à l'entrée du deuxième échangeur de chaleur jusqu'à une température finale TCf à la sortie du deuxième échangeur de chaleur, avec TCf >TCi. Au moins une partie, et de préférence la totalité, du comburant riche en oxygène préchauffé issu du deuxième échangeur de chaleur est fournie à la chambre de combustion comme comburant pour la combustion du combustible.

La température finale TOf de l'oxydant à la sortie du premier échangeur de chaleur est avantageusement de 200°C à 400°C, de préférence de 250°C à 400°C, et encore de préférence de 300°C à 400°C. La température finale TCf du comburant à la sortie du deuxième échangeur de chaleur est avantageusement de 400°C °à 850°C, de préférence de 400°C à 700°C, et encore de préférence de 500°C à 650°C.

L'invention permet d'optimiser le préchauffage d'un comburant riche en oxygène. En effet, bien qu'on chauffe dans le premier échangeur de chaleur un oxydant particulièrement riche en oxygène, il n'est pas nécessaire d'utiliser des matériaux particulièrement nobles et donc coûteux (voir ci-dessus) pour les éléments de l'installation qui entrent en contact avec l'oxydant chaud, car la température de l'oxydant chaud reste nettement inférieure à la température à laquelle le comburant préchauffé est fourni à la chambre de combustion.

D'autre part, bien que, dans le deuxième échangeur, on préchauffe le comburant jusqu'à des températures particulièrement élevées (au moins la température à laquelle le comburant est introduit dans la chambre de combustion), il n'est pas nécessaire d'utiliser des matériaux particulièrement nobles et donc coûteux pour les éléments de l'installation qui entrent en contact avec le comburant préchauffé, car la teneur en oxygène du comburant est inférieure à la teneur en oxygène de ce qu'on appelle de l'«oxygène industriel » et plus particulièrement pas supérieure à 90%vol.

Lesdits avantages liés à la récupération et l'exploitation de la chaleur résiduelle des fumées évacuées pour le préchauffage du comburant compensent plus que l'effet de la réduction de la teneur en oxygène du comburant (par rapport à la teneur en oxygène de l'oxydant) sur l'efficacité de la combustion.

Dans le présent contexte, on comprend par :
- un gaz « riche en oxygène » ou « riche » : un gaz ayant une teneur en oxygène supérieure 70%vol ;
- un gaz « majoritairement inerte » : un gaz consistant pour plus de 50%vol en une ou des substances qui ne participent pas à la combustion (ni en tant que combustible ni en tant que comburant) aux conditions existantes dans la chambre de combustion. Un gaz majoritairement inerte contient donc nécessairement moins que 50% vol d'oxygène ;
- « échangeur de chaleur » : une installation ou un dispositif de chauffage dans lequel le fluide caloporteur, qui apporte de la chaleur, et le fluide à chauffer circulent dans des enceintes distinctes, le fluide caloporteur transmettant de la chaleur au fluide à chauffer à travers une ou des parois séparant les deux enceintes et donc sans contact direct ou mélange entre le fluide caloporteur et le fluide à chauffer ;
- « brûleur » : un dispositif ou un ensemble de dispositifs pour la mise en contact d'au moins un combustible avec au moins un comburant afin de permettre la combustion dudit au moins un combustible au moyen dudit au moins un comburant. Un brûleur comporte typiquement des injecteurs et/ou lances pour l'injection de combustible et de comburant dans une zone de combustion ;
- « chaleur résiduelle » : la chaleur qui est évacuée de la chambre de combustion avec les fumées générées par la combustion ;
- « préchauffage » : le chauffage d'un produit, tel qu'un combustible, un comburant ou encore une charge à chauffer ou fondre, avant son introduction dans la chambre de combustion.

Le gaz qui est mélangé avec l'oxydant chauffé afin d'obtenir le comburant peut être choisi parmi de l'air, un gaz majoritairement inerte ou un mélange d'air avec un gaz majoritairement inerte. Le gaz majoritairement inerte peut être choisi parmi de la vapeur, du CO₂, de la fumée évacuée de la chambre de combustion ou encore un mélange d'au moins deux desdits gaz majoritairement inertes.

Quand il est important de limiter la formation de NOx à un minimum, on utilise de préférence de la vapeur, du CO₂, de la fumée évacuée de la chambre de combustion ou encore un mélange d'au moins deux desdits gaz.

Suivant une forme de réalisation particulière, on fournit un flux principal de fluide caloporteur contenant de la chaleur résiduelle des fumées évacuées et on divise ledit flux principal en au moins deux portions. Une première portion constitue le premier fluide caloporteur utilisé dans le premier échangeur de chaleur et une deuxième portion est utilisée comme deuxième fluide caloporteur dans le deuxième échangeur. Dans ce cas, une troisième portion du flux principal de fluide caloporteur peut avantageusement être utilisée pour le préchauffage du combustible en amont de la chambre de combustion par échange thermique entre la troisième portion et le combustible dans un échangeur de chaleur supplémentaire.

Suivant une forme de réalisation alternative, on utilise au moins une première partie du flux principal de fluide caloporteur comme deuxième fluide caloporteur et on utilise comme premier fluide caloporteur ladite au moins une première partie du flux principal après son passage à travers le deuxième échangeur de chaleur.

Il est alors avantageux d'utiliser au moins une deuxième partie du flux principal de fluide caloporteur pour le préchauffage du combustible en amont de la chambre de combustion par échange thermique entre la deuxième partie et le combustible dans un échangeur de chaleur supplémentaire.

Il est possible d'utiliser au moins une partie des fumées évacuées comme premier et/ou deuxième fluides caloporteurs.

Suivant une autre forme de réalisation, on récupère de la chaleur résiduelle des fumées évacuées en chauffant un fluide auxiliaire par échange thermique avec les fumées évacuées dans un échangeur de chaleur auxiliaire.

Au moins une partie dudit fluide auxiliaire chauffé dans l'échangeur de chaleur auxiliaire est alors utilisé comme premier et/ou deuxième fluide caloporteur, de préférence comme premier et deuxième fluides caloporteurs.

Dans ce cas, on utilise de préférence comme fluide auxiliaire de l'air ou un fluide majoritairement inerte ou un mélange d'air avec un fluide majoritairement inerte. Le fluide majoritairement inerte est de préférence choisi parmi de la vapeur, du CO₂ et les mélanges desdits gaz. Le fluide auxiliaire est de préférence de l'air. La température du fluide auxiliaire à la sortie de l'échangeur auxiliaire est de manière utile de 600°C à 900°C, de préférence de 650°C à 800°C, et encore de préférence de 650°C à 700°C.

Il est alors possible, de manière particulièrement avantageuse, d'obtenir le comburant riche en oxygène en mélangeant l'oxydant chauffé avec une partie :
(i) du fluide auxiliaire chauffé issu de l'échangeur de chaleur auxiliaire,
(ii) du fluide auxiliaire issu du premier échangeur de chaleur après son utilisation comme premier fluide caloporteur, ou
(iii) du fluide auxiliaire issu du deuxième échangeur de chaleur après son utilisation comme deuxième fluide caloporteur.

De cette manière, on optimise la récupération de la chaleur résiduelle des fumées évacuées.

Il est à noter que les différents échangeurs de chaleur, et en particulier le premier et le deuxième échangeur de chaleur, peuvent se présenter sous forme d'appareils distincts, chacun ayant sa propre enveloppe extérieure.

Toutefois, lesdits échangeurs de chaleur peuvent également être intégrés dans un même appareil, c'est-à-dire être entourés d'une même enveloppe extérieure.

La chambre de combustion peut être une chambre de fusion, une chambre d'affinage, une chambre de fusion-affinage ou un distributeur de matière fondue (en anglais : « feeder »), de préférence une chambre de fusion de verre ou de métal, une chambre d'affinage de verre ou de métal, une chambre de fusion-affinage de verre ou de métal ou un distributeur de verre fondu ou du métal fondu.

Le procédé de combustion fait alors partie d'un procédé de fusion, d'un procédé d'affinage, d'un procédé de fusion-affinage, d'un procédé de distribution de matière fondue, notamment pour la fusion/affinage/distribution de verre ou de métaux.

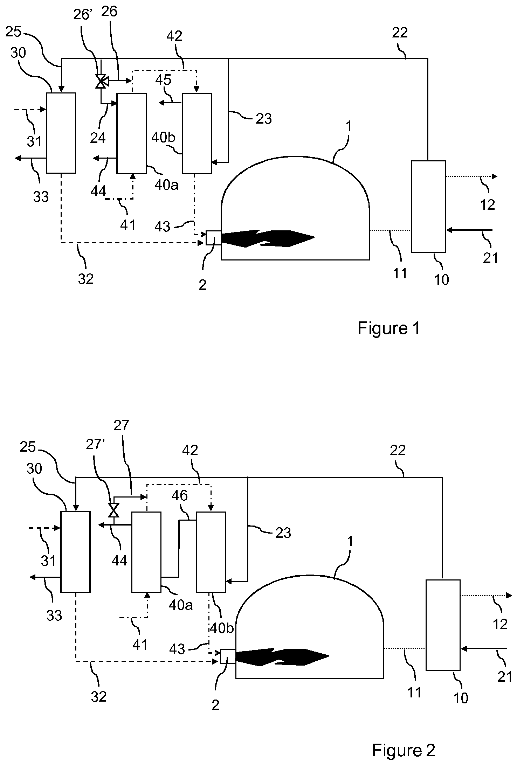

La présente invention et ses avantages sont illustrés plus en détail dans la description ci-après d'exemples de la présente invention, référence étant faite aux Figures 1 à 4 qui sont des représentations schématiques d'installations pour la mise en oeuvre de différentes formes de réalisation du procédé suivant l'invention.

Dans les différentes figures, les mêmes chiffres de référence désignent des éléments correspondants aux différentes formes de réalisation.

### I. Exemples 1 et 2 : récupération de la chaleur résiduelle au moyen d'un fluide intermédiaire et utilisation du fluide intermédiaire chauffé comme premier et deuxième fluide caloporteur et gaz de dilution majoritairement inerte.

### 1.1 : exemple 1 (Figure 1):

Comme illustré dans la figure 1, de la chaleur est générée à l'intérieur de la chambre de combustion 1 par combustion, par exemple, afin de chauffer et/ou de fondre une charge dans la chambre (comme par exemple de la vapeur, des métaux, de la matière vitrifiable, etc.). Les fumées générées 11 sont évacuées de la chambre 1 au moyen d'une sortie de fumées. Les fumées évacuées 11 contiennent de la chaleur résiduelle. Suivant l'invention, cette chaleur résiduelle est valorisée, en particulier pour le préchauffage du comburant et de préférence du comburant et du combustible, en amont de la chambre de combustion 1.

A cette fin, les fumées évacuées 11 (ou au moins une partie desdites fumées) sont introduites dans un échangeur de chaleur auxiliaire 10. Dans cet échangeur de chaleur auxiliaire 10, un fluide auxiliaire 21 est chauffé par échange thermique avec les fumées évacuées. Dans le cas illustré, le fluide auxiliaire à chauffer 21 est de l'air à température ambiante.

A la sortie de l'échangeur auxiliaire 10, les fumées refroidies 12 sont amenées vers une cheminée, le cas échéant après un traitement de nettoyage (non-illustré) pour éliminer des poussières ou d'autres polluants.

Le fluide auxiliaire chauffé 22 présente une température de l'ordre de 700°C et constitue un flux principal de fluide caloporteur.

Ledit flux principal 22 est divisé en plusieurs portions (23, 24, 25).

Une première portion 24 de fluide caloporteur est introduite dans un premier échangeur de chaleur 40a pour le chauffage d'un oxydant 41 à haute teneur en oxygène.

Dans le cas illustré, l'oxydant 41 à une teneur en oxygène d'approximativement 100%vol, typiquement de l'ordre de 99%vol. La source d'oxydant (non-illustrée) peut par exemple être un pipeline d'oxydant, un réservoir d'oxydant ou une installation pour la production d'un gaz à haute teneur en oxygène, telle qu'une unité de séparation des gaz de l'air.

Le fluide caloporteur tempéré 44 de cette première portion 24 est récupéré à la sortie du premier échangeur 40a.

L'oxydant chauffé sort du premier échangeur 40a à une température d'environ 400°C. Il est mélangé avec du fluide caloporteur (fluide (air) auxiliaire) chauffé 26 au prorata de 12 parties (vol) de fluide caloporteur 26 sur 100 parties (vol) d'oxydant chauffé.

On obtient ainsi un comburant riche en oxygène 42 avec une teneur en oxygène de 91,5%vol et une température de l'ordre de 402°C, qui est introduit dans un deuxième échangeur 40b (voir tableau 1).

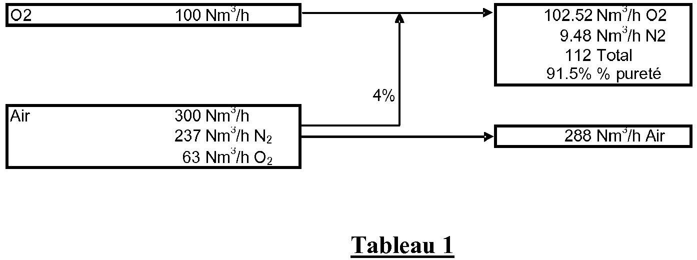

Dans l'installation illustrée dans la figure 1, le mélange d'oxydant chauffé et du fluide caloporteur est réalisé à la sortie de l'oxydant chauffé du premier échangeur 40a, au moyen d'une canalisation reliant, d'une part, la ligne amenant la première portion 24 de fluide caloporteur vers le premier échangeur 40a, à, d'autre part, la ligne reliant la sortie d'oxydant chauffé du premier échangeur 40a à l'entrée de comburant riche du deuxième échangeur 40b. Une vanne montée sur la première ligne règle le débit de fluide caloporteur ainsi dirigé vers la seconde ligne via la canalisation les reliant.

Dans le deuxième échangeur 40b, le comburant riche en oxygène 42 ainsi obtenu est à son tour chauffé par échange thermique avec une deuxième portion 23 du fluide caloporteur chauffé jusqu'à une température de préchauffage de 650°C. Le fluide caloporteur tempéré 45 de cette deuxième portion est évacué du deuxième échangeur 40b et le comburant riche en oxygène préchauffé 43 est fourni à un ou plusieurs brûleurs 2 de la chambre de combustion 1 pour la combustion de combustible dans ladite chambre 1, avec génération de chaleur et des fumées.

Du fait que la température de l'oxydant 41 dans le premier échangeur 40a reste relativement basse, il est possible de réaliser ce premier échangeur 40a sans devoir faire appel à des matériaux particulièrement coûteux connus pour leur résistance particulièrement élevée à de l'oxygène approximativement pur à haute température, tout en assurant une durabilité et fiabilité élevées dudit premier échangeur 40a.

Du fait que la teneur en oxygène du comburant riche en oxygène 42 est inférieure à la teneur en oxygène de l'oxydant 41, il est possible, de manière analogue, malgré la température élevée du comburant 42, 43 dans le deuxième échangeur 40b, de réaliser ce deuxième échangeur 40b sans devoir faire appel à de tels matériaux coûteux, tout en assurant une durabilité et une fiabilité élevées du deuxième échangeur 40b.

Selon la forme de mise en oeuvre illustrée, une troisième portion 25 du fluide caloporteur chauffé 22 est utilisée dans un échangeur de chaleur supplémentaire 30, pour le préchauffage du combustible 31. Pour un combustible gazeux tel que le gaz naturel, le combustible est typiquement chauffé jusqu'à une température de préchauffage de 400 °C à 600°C.

Le fluide caloporteur tempéré 33 de cette troisième portion 25 est évacué de l'échangeur supplémentaire 30 et le combustible préchauffé 32 issu de l'échangeur supplémentaire 30 est fourni au(x) brûleur(s) 2 pour être brûlé dans la chambre 1 avec le comburant préchauffé 43.

### 1.2 : exemple 2 (Figure 2):

La forme de réalisation illustrée dans la figure 2 se distingue de celle illustrée dans la figure 1 principalement en ce qu'une seule portion 23 de fluide caloporteur chauffé 22 est utilisée pour respectivement le chauffage de l'oxydant 41 et le préchauffage du comburant 42.

Ladite portion 23 du fluide caloporteur chauffé 22 est d'abord utilisée pour le préchauffage du comburant riche en oxygène 42 dans le deuxième échangeur de chaleur 40b et le fluide caloporteur partiellement tempéré 45 de cette portion est évacué du deuxième échangeur 40b et introduit dans le premier échangeur 40a pour le chauffage de l'oxydant 41.

Le comburant riche en oxygène 42, qui est introduit dans le deuxième échangeur 40b, est obtenu en mélangeant de l'oxydant chauffé issu du premier échangeur 40a avec une partie 27 du fluide caloporteur (fluide (air) auxiliaire) tempéré 44 issu dudit premier échangeur 40a au prorata de 12 parties (vol) de fluide caloporteur sur 100 parties (vol) d'oxydant chauffé.

Le mélange d'oxydant chauffé et du fluide caloporteur chauffé est réalisé à la sortie de l'oxydant chauffé du premier échangeur 40a, au moyen d'une canalisation reliant, d'une part, la sortie de fluide caloporteur tempéré 44 du premier échangeur 40a, à, d'autre part, la ligne reliant la sortie de l'oxydant chauffé du premier échangeur 40a à l'entrée de comburant riche du deuxième échangeur 40b. Le débit de fluide caloporteur tempéré dirigé vers la seconde ligne est à nouveau réglé par une vanne 27'.

Après avoir servi comme fluide caloporteur dans les différents échangeurs 40a, 40b, 30, le fluide auxiliaire ou les portions de fluide auxiliaire 44, 45, 33 peuvent (i) recirculer, (ii) être envoyés dans l'atmosphère (si la nature du fluide auxiliaire le permet) ou (iii) être utilisés à d'autres fins sur le site.

### II Exemples 3 et 4 : utilisation de fumées évacuées de la chambre de combustion comme premier et deuxième fluide caloporteur.

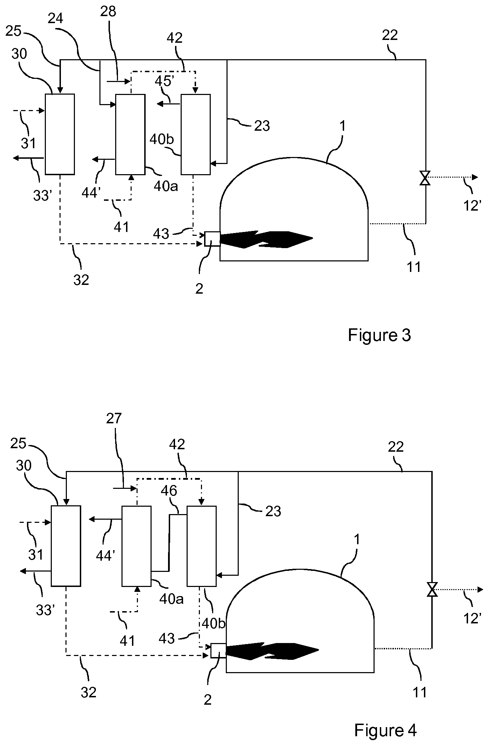

### II.1 : exemple 3 (Figure 3):

La forme de réalisation de la figure 3 se distingue de celle de la figure 1 principalement en ce qu'on utilise au moins une partie des fumées 11 évacuées de la chambre 1 directement comme fluide caloporteur chaud 22.

De la chaleur résiduelle est donc transférée directement des fumées évacuées 22 respectivement vers l'oxydant 41 dans le premier échangeur de chaleur 40a, vers le comburant 42 dans le deuxième échangeur de chaleur 40b et vers le combustible 31 dans l'échangeur de chaleur complémentaire 30 (sans transfert intermédiaire vers un fluide auxiliaire utilisé en tant que fluide caloporteur dans un échangeur auxiliaire 10).

Les coûts de l'installation et les pertes d'énergie thermique sont ainsi réduits. Toutefois, l'utilisation prolongée de cette option du procédé suivant l'invention est généralement limitée aux procédés de chauffe produisant des fumées relativement propres, c'est-à-dire des fumées avec une teneur faible en poussières et en matières condensables.

Le comburant riche en oxygène 42 est obtenu en mélangeant l'oxydant chauffé issu du premier échangeur 40a avec de l'air et notamment de l'air ambiant ou avec un gaz majoritairement inerte 28 tel que de l'air ambiant, de la vapeur, du N₂ ou du CO₂.

### II.2 : Exemple 4 (Figure 4):

La forme de réalisation de la figure 4 se distingue de manière analogue de celle de la figure 2 en ce qu'on utilise comme fluide caloporteur chaud 22 au moins une partie des fumées 11 évacuées de la chambre 1.

Le comburant riche en oxygène 42 est obtenu en mélangeant l'oxydant chauffé issu du premier échangeur 40a avec de l'air et notamment de l'air ambiant ou avec un gaz majoritairement inerte 28 tel que de la vapeur, du N₂ ou du CO₂.

Après avoir servi comme fluide caloporteur, les fumées tempérées 44', 45', 33' sont envoyées vers la cheminée, tout comme la portion 12' des fumées évacuées n'ayant pas servi comme fluide caloporteur.

## Revendications

1. Procédé pour la combustion, dans une chambre de combustion (1), d'un combustible (32) avec un comburant préchauffé (43) riche en oxygène avec génération de chaleur et de fumées (11) dans ladite chambre de combustion (1), procédé dans lequel :
- les fumées (11) sont évacuées de la chambre de combustion (1), lesdites fumées évacuées (11) contenant de la chaleur résiduelle ;
- le comburant (42) est préchauffé au moyen de ladite chaleur résiduelle dans au moins un échangeur de chaleur (40a, 40b) ; et
- le comburant préchauffé (43) est fourni à la chambre de combustion (1) pour la combustion du combustible,
- dans un premier échangeur de chaleur (40a), on chauffe, par échange thermique avec un premier fluide caloporteur (24, 45) contenant au moins une première partie de la chaleur résiduelle des fumées évacuées, un oxydant (41) ayant une teneur 01 en oxygène de 80%vol à 100%vol, et de préférence de 90%vol à 100%vol, d'une température initiale TOi à l'entrée du premier échangeur (40a) jusqu'à une température finale TOf à la sortie du premier échangeur (40a), avec TOf >TOi, ;
- on mélange l'oxydant chauffé issu du premier échangeur de chaleur (40a) avec de l'air, avec un gaz majoritairement inerte ou avec un mélange d'air avec du gaz majoritairement inerte, de manière à obtenir un comburant riche en oxygène (42) ayant une teneur 02 en oxygène de 70%vol à 90%vol, et de préférence de 75%vol à 85%vol, avec O2 < O1;
- dans un deuxième échangeur de chaleur (40b), on préchauffe, par échange thermique avec un deuxième fluide caloporteur (23, 46) contenant au moins une deuxième partie de la chaleur résiduelle des fumées évacuées, le comburant riche en oxygène (42) ayant une teneur O2 en oxygène de 70%vol à 90%vol, et de préférence de 75%vol à 85%vol, avec O2 < O1, d'une température initiale TCi à l'entrée du deuxième échangeur de chaleur (40b) jusqu'à une température finale TCf à la sortie du deuxième échangeur de chaleur (40b), avec TCf>TCi ; et
- on fournit au moins une partie du comburant riche en oxygène préchauffé (43) issu du deuxième échangeur de chaleur (40b) à la chambre de combustion (1) pour la combustion du combustible.

2. Procédé suivant la revendication 1, dans lequel la température finale TOf de l'oxydant à la sortie du premier échangeur de chaleur (40a) est de 200°C à 400°C, de préférence de 250C à 400C, et encore de préférence de 300°C à 400°C.

3. Procédé suivant l'une des revendications 1 et 2, dans lequel la température finale TCf du comburant à la sortie du deuxième échangeur de chaleur (40b) est de 400°C à 850°C, de préférence de 400°C à 700°C, et encore de préférence de 500°C à 650°C.

4. Procédé suivant l'une quelconque des revendications précédentes, dans lequel on mélange l'oxydant chauffé issu du premier échangeur de chaleur avec de l'air ou avec un mélange d'air et d'un gaz majoritairement inerte de manière à obtenir le comburant riche en oxygène.

5. Procédé suivant l'une quelconque des revendications précédentes, dans lequel le gaz majoritairement inerte (28) est choisi parmi de la vapeur, du CO₂, de la fumée évacuée de la chambre de combustion ou encore un mélange d'au moins deux desdits gaz.

6. Procédé suivant l'une quelconque des revendications précédentes, dans lequel on fournit un flux principal de fluide caloporteur contenant de la chaleur résiduelle des fumées évacuées (11) et on divise ledit flux principal (22) en au moins deux portions :
• une première portion (24) constituant le premier fluide caloporteur, et
• une deuxième portion (23) constituant le deuxième fluide caloporteur, et
• de préférence également une troisième portion (25), ladite troisième portion (25) étant utilisée pour le préchauffage du combustible (31) en amont de la chambre de combustion (1) par échange thermique entre la troisième portion (25) et le combustible (31) dans un échangeur de chaleur supplémentaire (30).

7. Procédé suivant l'une quelconque des revendications 1 à 4, dans lequel :
• on fournit un flux principal de fluide caloporteur (22) contenant de la chaleur résiduelle des fumées évacuées (11),
• on utilise au moins une première partie (23) dudit flux principal (22) comme deuxième fluide caloporteur,
• on utilise comme premier fluide caloporteur ladite au moins une première partie du flux principal (46) après son passage à travers le deuxième échangeur de chaleur (40b), et
• on utilise de préférence au moins une deuxième partie (25) du flux principal (22) du fluide caloporteur pour le préchauffage du combustible (31) en amont de la chambre de combustion (1) par échange thermique entre la deuxième partie (25) et le combustible (31) dans un échangeur de chaleur supplémentaire (30).

8. Procédé suivant l'une quelconque des revendications précédentes, dans lequel on utilise de la fumée évacuée (11) de la chambre de combustion (1) comme premier et/ou deuxième fluide caloporteur, de préférence comme premier et deuxième fluides caloporteurs.

9. Procédé suivant l'une quelconque des revendications 1 à 7, dans lequel :
- on récupère de la chaleur résiduelle des fumées évacuées (11) en chauffant un fluide auxiliaire (21) par échange thermique avec les fumées évacuées (11) dans un échangeur de chaleur auxiliaire (10), et
- on utilise du fluide auxiliaire chauffé dans l'échangeur de chaleur auxiliaire (10) comme premier et/ou deuxième fluides caloporteurs (23, 24, 46), de préférence comme premier et deuxième fluide caloporteur.

10. Procédé suivant la revendication 9, dans lequel le fluide auxiliaire (21) est de l'air, un fluide majoritairement inerte ou un mélange d'air avec un fluide majoritairement inerte, le fluide majoritairement inerte étant de préférence choisi parmi de la vapeur, du CO₂ et les mélanges d'au moins deux desdits gaz majoritairement inertes, le fluide auxiliaire (21) étant de préférence de l'air.

11. Procédé suivant la revendication 10, dans lequel le comburant riche en oxygène est obtenu en mélangeant l'oxydant chauffé avec une partie :
(i) du fluide auxiliaire chauffé issu de l'échangeur de chaleur auxiliaire (10),
(ii) du fluide auxiliaire issu du premier échangeur de chaleur (40a) après son utilisation comme premier fluide caloporteur ou
(iii) du fluide auxiliaire issu du deuxième échangeur de chaleur (40b) après son utilisation comme deuxième fluide caloporteur.

12. Procédé suivant l'une quelconque des revendications précédentes, dans lequel la chambre de combustion (1) est une chambre de fusion, une chambre d'affinage, une chambre de fusion-affinage ou un distributeur de matière fondue, de préférence une chambre de fusion de verre ou de métal, une chambre d'affinage de verre ou de métal, une chambre de fusion-affinage de verre ou de métal ou un distributeur de verre fondu ou de métal fondu.

## Patentansprüche

1. Verfahren zur Verbrennung, in einer Verbrennungskammer (1), eines Brennstoffs (32) mit einem vorerhitzten sauerstoffreichen Oxidationsmittel (43) mit Erzeugung von Hitze und von Rauch (11) in der Verbrennungskammer (1), Verfahren, bei dem:
- Rauch (11) aus der Verbrennungskammer (1) abgeleitet wird, wobei der abgeleitete Rauch (11) Restwärme enthält;
- das Oxidationsmittel (42) mit Hilfe der Restwärme in mindestens einem Wärmetauscher (40a, 40b) vorerhitzt wird; und
- das vorerhitzte Oxidationsmittel (43) zur Verbrennung des Brennstoffs (1) an die Verbrennungskammer (1) geliefert wird,
- in einem ersten Wärmetauscher (40a) durch Wärmetausch mit einem ersten Wärmeträgerfluid (24, 25), das mindestens einen ersten Teil der Restwärme des abgeleiteten Rauchs enthält, ein Oxidationsmittel (41), das eine Sauerstoffgehalt O1 von 80 Vol% bis 100 Vol% und vorzugsweise 90 Vol% bis 100 Vol% aufweist, von einer Anfangstemperatur TOi am Eingang des ersten Tauschers (40a) bis zu einer endgültigen Temperatur TOf am Ausgang des ersten Tauschers (40a) erhitzt wird, wobei TOf >TOi ist,;
- das erhitzte Oxidationsmittel, das aus dem ersten Wärmetauscher (40a) stammt, mit Luft, mit einem zum Großteil inerten Gas oder mit einer Mischung von Luft mit zum Großteil inerten Gas gemischt wird, um ein sauerstoffreiches Oxidationsmittel (42) zu erhalten, das einen Sauerstoffgehalt O2 von 70 Vol% bis 90 Vol% und vorzugsweise 75 Vol% bis 85 Vol% aufweist, wobei O2 < O1 ist;
- in einem zweiten Wärmetauscher (40b) durch Wärmetausch mit einem zweiten Wärmeträgerfluid (23, 46), das mindestens einen zweiten Teil der Restwärme des abgeleiteten Rauchs enthält, wobei das sauerstoffreiche Oxidationsmittel (42), das einen Sauerstoffgehalt O2 von 70 Vol% bis 90 Vol% und vorzugsweise 75 Vol% bis 85 Vol% aufweist, wobei O2 < O1, von einer anfänglichen Temperatur TCi am Eingang des zweiten Wärmetauschers (40b) bis zu einer endgültigen Temperatur TCf am Ausgang des zweiten Wärmetauschers (40b) erhitzt wird, wobei TCf > TCi ist; und
- mindestens ein Teil des vorerhitzten sauerstoffreichen Oxidationsmittels (43), das vom zweiten Wärmetauscher (40b) stammt, zur Verbrennung des Brennstoffs an die Verbrennungskammer (1) geliefert wird.

2. Verfahren nach Anspruch 1, wobei die endgültige Temperatur TOf des Oxidationsmittels am Ausgang des ersten Wärmetauschers (40a) 200 °C bis 400 °C, vorzugsweise 250 ºC bis 400 ºC und besonders bevorzugt 300 °C bis 400 °C beträgt.

3. Verfahren nach einem der Ansprüche 1 und 2, wobei die endgültige Temperatur TCf des Oxidationsmittels am Ausgang des zweiten Wärmetauschers (40b) 400 °C bis 850 °C, vorzugsweise 400 °C bis 700 °C und besonders bevorzugt 500 °C bis 650 °C beträgt.

4. Verfahren nach einem der vorstehenden Ansprüche, wobei das erhitzte Oxidationsmittel, das aus dem ersten Wärmetauscher stammt, mit Luft oder mit einer Mischung aus Luft und einem zum Großteil inerten Gas gemischt wird, um ein sauerstoffreiches Oxidationsmittel zu erhalten.

5. Verfahren nach einem der vorstehenden Ansprüche, wobei das zum Großteil inerte Gas (28) ausgewählt ist aus Dampf, CO₂, Rauch, der aus der Verbrennungskammer abgeleitet wird, oder auch einer Mischung aus mindestens zwei dieser Gase.

6. Verfahren nach einem der vorstehenden Ansprüche, wobei ein Hauptfluss von Wärmeträgerfluid, der die Restwärme des abgeleiteten Rauchs (11) enthält, geliefert wird, und der Hauptfluss (22) in mindestens zwei Abschnitte unterteilt wird;
• einen ersten Abschnitt (24), der das erste Wärmeträgerfluid darstellt, und
• einen zweiten Abschnitt (23), der das zweite Wärmeträgerfluid darstellt, und
• vorzugsweise auch einen dritten Abschnitt (25), wobei der dritte Abschnitt (25) für das Vorerhitzen des Brennstoffs (31) vorgelagert von der Verbrennungskammer (1) durch Wärmetausch zwischen dem dritten Abschnitt (25) und dem Brennstoff (31) in einem zusätzlichen Wärmetauscher (30) verwendet wird.

7. Verfahren nach einem der Ansprüche 1 bis 4, wobei
• ein Hauptfluss von Wärmeträgerfluid (22), der Restwärme des abgeleiteten Rauchs (11) enthält, geliefert wird,
• mindestens ein erster Teil (23) des Hauptflusses (22) als zweites Wärmeträgerfluid verwendet wird,
• als erstes Wärmeträgerfluid der mindestens eine Teil des Hauptflusses (46) nach seinem Durchgang durch den zweiten Wärmetauscher (40b) verwendet wird,
• vorzugsweise mindestens ein zweiter Teil (25) des Hauptflusses (22) des Wärmeträgerfluids für das Vorerhitzen des Brennstoffs (31) vorgelagert von der Verbrennungskammer (1) durch Wärmetausch zwischen dem zweiten Teil (25) und dem Brennstoff (31) in einem zusätzlichen Wärmetauscher (30) verwendet wird.

8. Verfahren nach einem der vorstehenden Ansprüche, wobei der abgeleitete Rauch (11) der Verbrennungskammer (1) als erstes und/oder zweites Wärmeträgerfluid, vorzugsweise als erstes und zweites Wärmeträgerfluid, verwendet wird.

9. Verfahren nach einem der Ansprüche 1 bis 7, wobei:
- Restwärme des abgeleiteten Rauchs (11) wiedergewonnen wird, indem ein Hilfsfluid (21) durch Wärmetausch mit dem abgeleiteten Rauch (11) in einem Hilfswärmetauscher (10) erhitzt wird, und
- im Hilfswärmetauscher (10) erhitztes Hilfsfluid als erstes und/oder zweites Wärmeträgerfluid (23, 24, 46), vorzugsweise als erstes und zweites Wärmeträgerfluid, verwendet wird.

10. Verfahren nach Anspruch 9, wobei das Hilfsfluid (21) Luft, ein zum Großteil inertes Fluid oder eine Mischung von Luft mit einem zum Großteil inerten Gas ist, wobei das zum Großteil inerte Fluid vorzugsweise ausgewält ist aus Dampf, CO₂ und den Mischungen von mindestens zwei der zum Großteil inerten Gase, wobei das Hilfsfluid (21) vorzugsweise Luft ist.

11. Verfahren nach Anspruch 10, wobei das sauerstoffreiche Oxidationsmittel durch Mischen des erhitzten Oxidationsmittels mit einem Teil des Folgenden erhalten wird:
(i) des erhitzten Hilfsfluids, das aus dem Hilfswärmetauscher (10) stammt,
(ii) des Hilfsdfluids, das aus dem ersten Wärmetauscher (40a) nach seiner Verwendung als erstes Wärmeträgerfluid stammt, oder
(iii) des Hilfsfluids, das aus dem zweiten Wärmetauscher (40b) nach seiner Verwendung als zweites Wärmeträgerfluid stammt.

12. Verfahren nach einem der vorstehenden Ansprüche, wobei die Verbrennungskammer (1) eine Schmelzkammer, eine Reifekammer eine Schmelz-Reifekammer oder ein Verteiler von geschmolzenem Material ist, vorzugsweise eine Schmelzkammer von Glas oder von Metall, eine Reifekammer von Glas oder von Metall, eine Schmelz-Reifekammer von Glas oder von Metall oder ein Verteiler von gemschmolzenem Glas oder geschmolzenem Metall.

## Claims

1. Method for combustion, in a combustion chamber (1), of a fuel (32) with an oxygen-rich preheated oxidizer (43) with heat and smoke generation (11) in said combustion chamber (1), method wherein:
- the smoke (11) is evacuated from the combustion chamber (1), said evacuated smoke (11) containing residual heat;
- the oxidizer (42) is preheated by means of said residual heat in at least one heat exchanger (40a, 40b); and
- the preheated oxidizer (43) is provided to the combustion chamber (1) for the combustion of the fuel,
- in a first heat exchanger (40a), an oxidant (41), with a content O1 of oxygen from 80% vol. to 100% vol., and preferably from 90% vol. to 100% vol. is heated, by heat exchange with a first heat transfer fluid (24, 45) containing at least a first part of the residual heat from the evacuated smoke, from an initial temperature TOi at the inlet of the first exchanger (40a) up to a final temperature TOf at the outlet of the first exchanger (40a), with TOf > TOi;
- the heated oxidant from the first heat exchanger (40a) is mixed with air, with a mainly inert gas or with a mixture of air with mainly inert gas, so as to obtain an oxygen-rich oxidizer (42) with a content O2 of oxygen from 70% vol. to 90% vol., and preferably from 75% vol. to 85% vol., with O2 < O1;
- in a second heat exchanger (40b), the oxygen-rich oxidizer (42) with a content O2 of oxygen 70% vol. to 90% vol., and preferably 75% vol. to 85% vol., with O2 < O1, is heated, by heat exchange with a second heat transfer fluid (23, 46) containing at least a second part of the residual heat from the evacuated smoke, from an initial temperature TCi at the inlet of the second heat exchanger (40b) up to a final temperature TCf at the outlet of the second heat exchanger (40b), with TCf > TCi; and
- at least one part of the preheated oxygen-rich oxidizer (43) from the second heat exchanger (40b) is provided to the combustion chamber (1) for the combustion of the fuel.

2. Method according to claim 1, wherein the final temperature TOf of the oxidant at the outlet of the first heat exchanger (40a) is from 200°C to 400°C, preferably from 250°C to 400°C, and more preferably from 300°C to 400°C.

3. Method according to one of claims 1 and 2, wherein the final temperature TCf of the oxidizer at the outlet of the second heat exchanger (40b) is from 400°C to 850°C, preferably from 400°C to 700°C, and more preferably from 500°C to 650°C.

4. Method according to any one of the preceding claims, wherein the heated oxidant from the first heat exchanger is mixed with air or with a mixture of air and a mainly inert gas so as to obtain the oxygen-rich oxidizer.

5. Method according to any one of the preceding claims, wherein the mainly inert gas (28) is selected from among steam, CO₂, smoke evacuated from the combustion chamber, or a mixture of at least two of said gases.

6. Method according to any one of the preceding claims, wherein a main stream of heat transfer fluid containing residual heat from the evacuated smoke (11) is provided, and wherein said main stream (22) is split into at least two portions:
• a first portion (24) constituting the first heat transfer fluid, and
• a second portion (23) constituting the second heat transfer fluid, and
• preferably also a third portion (25), said third portion (25) being used to preheat the fuel (31) upstream of the combustion chamber (1) by heat exchange between the third portion (25) and the fuel (31) in an additional heat exchanger (30).

7. Method according to any one of claims 1 to 4, wherein:
• a main stream of heat transfer fluid (22) containing residual heat from the evacuated smoke (11) is provided,
• at least a first part (23) of said main stream (22) is used as a second heat transfer fluid,
• said at least a first part of the main stream (46) is used as a first heat transfer fluid after the passing thereof through the second heat exchanger (40b), and
• preferably at least a second part (25) of the main stream (22) of the heat transfer fluid is used for preheating the fuel (31) upstream of the combustion chamber (1) by heat exchange between the second part (25) and the fuel (31) in an additional heat exchanger (30).

8. Method according to any one of the preceding claims, wherein the smoke (11) evacuated from the combustion chamber (1) is used as a first and/or a second heat transfer fluid, preferably as first and second heat transfer fluids.

9. Method according to any one of claims 1 to 7, wherein:
- residual heat is recovered from the evacuated smoke (11) by heating an auxiliary fluid (21) by heat exchange with the evacuated smoke (11) in an auxiliary heat exchanger (10), and
- an auxiliary fluid heated in the auxiliary heat exchanger (10) is used as a first and/or second heat transfer fluid (23, 24, 46), preferably as first and second heat transfer fluids.

10. Method according to claim 9, wherein the auxiliary fluid (21) is air, a mainly inert fluid or a mixture of air with a mainly inert fluid, the mainly inert fluid being preferably selected from among steam, CO₂ and mixtures of at least two of said mainly inert gases, the auxiliary fluid (21) being preferably air.

11. Method according to claim 10, wherein the oxygen-rich oxidizer is obtained by mixing the heated oxidant with part:
(i) of the heated auxiliary fluid from the auxiliary heat exchanger (10),
(ii) of the auxiliary fluid from the first heat exchanger (40a) after the use thereof as a first heat transfer fluid, or
(iii) of the auxiliary fluid from the second heat exchanger (40b) after the use thereof as a second heat transfer fluid.

12. Method according to any one of the preceding claims, wherein the combustion chamber (1) is a melting chamber, a refining chamber, a melting/refining chamber or a distributor of molten material, preferably a glass or metal melting chamber, a glass or metal refining chamber, a glass or metal melting/refining chamber or a feeder of molten glass or of molten metal.
